# EUROPEAN PATENT APPLICATION

(11) **EP 1 913 818 A1**
(43) Date of publication of application: **23.04.2008**
(21) Application number: 07118536.7
(22) Date of filing: 16.10.2007
(51) Int. Cl.: A21D 2/18, A21D 13/04, A21D 13/06

(54) **Method of preparing dough containing oat partially in the form of oat flour and partially in the form of oat kernels**

(30) Priority: 17.10.2006 FI 20060916
(71) Applicant: Uotilan Leipomo Oy, 36640 Liitasmäki (FI)
(72) Inventor: Uotila, Petri, 36640 Iltasmäki (FI)
(74) Representative: Knuth-Lehtola, Sisko Hillevi

(57) **Abstract**

The invention relates to a method for preparing dough that comprises oat by an industrial process. According to the method, oat is added to the dough partially in the form of oat flour and partially in the form of kernels so that the kernels are capable of binding the liquid in the dough, so that the dough is in a solid state. In addition, vegetable-based fibre that forms a hydrocolloid and starch that contains no β-glucan are added to the dough. The invention also relates to a bakery product prepared by the method.

## Description

The present invention relates to a new method for preparing dough comprising oat according to the preamble of Claim 1, dough prepared by the method according to the preamble of Claim 13, and a bakery product according to Claims 14 and 15.

The advantageous effects of oat on human health have been known for a long time. One of the health-promoting properties of oat is that it contains a lot of fibres. Carbohydrates that are not absorbed in the digestive tract are called dietary fibres, including cellulose, hemicellulose, lignin, vegetable gums and pectin, among others. The fibres are further divided into water insoluble fibres, which are found in kernel husk (cellulose, hemicellulose, lignin), and water-soluble ones, which are found in oat and barley (β-glucan) and in vegetables, fruit and berries (pectin). A fibre-rich diet reduces the risk of contracting cancers of the large intestine and the rectum. Soluble fibre (β-glucan), which comprises the major part of the oat fibre, decelerates the absorption of sugar and carbohydrates and keeps the blood sugar stable for a long time. B-glucan also helps lowering the blood cholesterol level and the amount of harmful LDL cholesterol, thus reducing the risk of cardiovascular diseases.

In addition to fibre, oat also contains good-quality fat and proteins, as well as minerals and vitamins B and E. Oat also has a low glycemic index.

As the many healthy properties of oat have been known for a long time, attempts have been made to add oat to various foodstuffs, especially bread. However, it has not been previously possible to add to bread significant amounts of β-glucan in a functional form. The problem with adding oat to bread is that oat does not have gluten, which has the effect that dough containing oat has weak baking qualities, and it is extremely difficult to render the texture of the bread spongy and stable. The dough is so loose that it is difficult to shape. The texture of the bread is often lost at the baking stage. Rye, barley and especially wheat flour do not suffer from this problem. The protein content of wheat flour is 8 to 15% and the major part thereof is gluten.

In the prior art, some breads containing oat have been described.

German patent publication DE 1 642 570 tries to solve the problem of how to easily bake the bread so as to have similar shapes and sizes as wheat bread does. According to the publication, oat flakes or oat flour were mixed with spices, raising agent, and beaten egg white. The amount of flour or flakes used was 650g per litre of egg white.

German patent publication DE 2 707 236, in turn, describes a method for preparing dietary bread containing Chinese kernel oat. The aim was to be able to use the said oat in the same way as other bread kernels are used in baking. According to the publication, the dough was prepared at three stages, between which the dough was allowed to rest and sour. At the first stage, thin mush was prepared from 500g of sour dough, 0.5 litre of mineral water, and 400g of crushed kernel oat and it was allowed to rest for 6 hours. 4kg of crushed kernel oat and 5 litres of water were added to the dough. Thereafter, pre-dough was prepared from the dough by adding 10 litres of water. 5kg of crushed kernel oat were added to this dough. Furthermore, 450g of salt, 3.375g of crushed wheat and wheat germs (1.125kg) were added thereto. According to the properties of the dough, another 9 to 10kg of crushed kernel oat were possibly added to the dough. Crushed wheat and germs were added to improve the baking qualities and the texture of the bread.

German patent publication DE 196 16 211 describes a method for preparing bread that contains several grains. Oat has been added in the form of oat flour or oat flakes about 10 w-%.

German patent publication DE 3 235 269 describes a method for preparing bread that contains oat flakes or oat flour and protein, wherein aleuron flour was mixed with the oat flakes or oat flour.

Chinese patent publication CN 1411 729 describes a dietary food product, such as noodles, bread or the like, which contained 3 to 30% by weight of mushrooms, 70 to 97% of oat flour, calcium lactate, and/or zinc lactate powder.

Hungarian patent publication HU 63739 describes bread that contains starch, binder and flavourings. The binder comprised various gums, e.g., guar, which were added in amounts of 10% by weight, at the most, to various gluten-free starches, such as potato, corn, or rice starches. The mixture of starch and binder was added to wheat, rye, barley or oat starch of at least 60% by weight.

US patent No. 911722 describes the manufacture of protein-rich bread. The bread was prepared by mixing boiled potatoes and boiled fish, by adding to this mixture corn, oat, barley, rice, millet, buckwheat or peanut flour, or flour made of legumes, such as beans, peas, etc., liquid and ferment agents and by preparing dough. The patent publication states that neither fish nor potato could be tasted or smelled in the bread prepared in this way, neither was the bread floury. According to the publication, the bread contains 1 portion of fish, 1 portion of potatoes, and 1 portion of flour, as well as necessary amounts of liquid and ferment agent.

The abstract of Duran et al. 2004, Gida 29(2):139-147 (FSTA AN 2005) describes the addition of potato flour and oat flour to wheat bread to improve its taste. 0, 5, 10 or 15% of potato flour and 0, 10, 20 or 30% of oat flour was suggested to be mixed with the wheat flour. The abstract of Ciobanu et al. 2002, Actes du Colloque Franco-Romain de Chimie Appliquee, 2nd, Bacau, Romania, Oct. 10-12, 2002, 221-222, Eds. Gavrila Lucian et al., Publisher University of Bacau, Rom (CA AN 139: 148749) describes the addition of oat flour to wheat flour to prepare low-gluten bread. The amount of wheat flour was 20%.

Patent publication US 2006/0008564 describes the preparation of dough for cookies that comprise psyllium fibre powder, phytosterol esters and oats. The amount of oat flour is suggested to be 5 to 20 % by weight. It is suggested that oats is used except in the form of flour, also in the form of bran and whole oats. However, there was an example only of using oat flour (11 % by weight).

Liljeberg, Granfeldt and Björck, European Journal of Clinical Nutrition (1992) 46, 561-575, have studied the metabolic effects of adding whole kernels to bread.

In most publications mentioned above, the bread containing oat was prepared by adding to the dough flour that was made of grains other than oat. In some cases, egg white, binders, such as gum or mushroom were added to the bread.

As stated above, adding large amounts of oat to bread is difficult because of the lack of gluten. Oat flour mainly contains starch. The normal gluten of wheat dough begins to form, when the water insoluble proteins of the flour bind liquid to themselves, which the soluble protein of oat is not able to do. When kneading wheat dough, the proteins form a gluten network around the starch. The gluten is capable of retaining the carbon dioxide that was generated as a result of the fermentation of yeast, which is why the pastry keeps its shape during leavening and baking.

When there is no gluten, no supporting network is formed around the starch, which would retain the carbon dioxide that was generated as a result of the yeast fermenting at the leavening stage of the bread. Because of the above, the bread barely keeps its shape during leavening, but no longer during baking. On the other hand, as the starch contained in the oat flour strongly swells during baking, the dough is preferably made loose, so that there is enough water for the starch to swell during baking. Such dough is impossible to handle in the same industrial processes as wheat bread dough or rye bread dough, for example.

However, as those suffering from a celiacic disease are not able to use foodstuffs containing gluten, there is a great demand for gluten-free bread. The number of those suffering from the celiacic disease from the population is about 1 to 2%. Gluten-free oat bread would be an ideal foodstuff for those people. So far, available gluten-free bread products suitable for those suffering from the celiacic disease have only included crisp bread, such as Vaasa's crisp bread, or frozen food, such as the fibre rolls of Moilas Oy or the white rolls of Rollfoods Ab, or special bread, such as the Glutano Wholemeal Sliced Bread or Glutano Crisp Bread, but fresh gluten-free bread has not been available on the market.

The present invention seeks to solve at least some of the prior art problems.

The present invention provides a method, by which a dough comprising a lot of oats can be baked by the industrial processes, especially by similar industrial processes, which are used for baking dough with gluten, such as the industrial processes used for baking wheat bread or rye bread.

The present invention also provides a bakery product that comprises a high content of oat.

According to a preferred embodiment of the invention, the ingredients of the oat bread are selected so that the bread is well-suited to a gluten-free diet, in particular.

To be more precise, the method according to the invention is mainly characterized in that, which is stated in the characterizing part of Claim 1.

The dough according to the invention is mainly characterized in that, which is stated in the characterizing part of Claim 13.

The bakery product according to the invention is mainly characterized in that, which is stated in the characterizing part of Claim 14 or 15.

The "bakery product" containing oat herein refers to any bakery product, to which a lot of oats are to be added. The present invention is suitable to be used in particular in an industrial process corresponding to a process used when baking dough with gluten. Preferably the process is suitable for preparing bread to be leavened by yeast. The invention is best-suited to preparing bread, rolls, and 'torn' bread and rusks. The method can also be used for preparing flat, thin loafs (in Finnish "rieska") and pita-type bread. For the sake of simplicity, the term "bread" in the description of the invention is used in its broader sense so as to also refer to other bread-type bakery products, which can be prepared by the method according to the invention.

The present invention is based on the fact that the problem with handling dough containing oat and the problem with the bread texture are solved with the aid of a novel dough composition. According to the present invention, the water that is needed in the bread at the baking stage is bound to the oat kernels in the dough. In that case, firmness comparable to wheat bread dough is provided in the dough. It has been observed that suitable firmness of the dough is obtained, when part of the oat that is added to the dough is in the form of oat flour, and part in the form of oat kernels. In that case, a sufficient amount of water in the dough is bound to the kernels for the baking stage, but the water is not free in the dough. At the baking stage, the kernels, in turn, deliver the water they have bound, whereby the starch is allowed to form a paste because of the heat and the sufficient amount of water.

In dough containing gluten, the gluten maintains the texture of the dough before the baking stage by forming a gluten network around the starch. In the present invention, the supporting texture is provided in the dough by means of vegetable-based fibre, which is able to form a hydrocolloid with the water. The vegetable fibre maintains the firmness of the dough until the starch begins to paste at the baking stage. This takes place at temperatures of about +70°C and higher. A suitable vegetable fibre, which forms the hydrocolloid, may originate in, for example, *Psyllium* plant or linen.

To ensure that there is enough water in the grains to make the starch swell and paste the starch at the baking stage and that the water is not bound by the β-glucan contained in the oat, part of the starch in the oat flour are replaced with another _starch that contains no β-glucan. As according to a preferred embodiment of the invention, the bread according to the invention is suitable for a gluten-free diet, the replacement is preferably carried out using gluten-free starch. For example, the starch obtained from potato flour is well-suited to this purpose.

As baking qualities similar to wheat or rye bread dough can be provided in the oat bread dough, when using the method according to the invention, it is possible, but not necessary, to add to the dough grains other than oat. If no other grains are added, the enzymes of the grains are not able to break down the β-glucan of the oat, which would destroy the health effects of the bread. In particular, if it is avoided to add to the bread enzymes that break down β-glucan, then neither they are able to break down the β-glucan and, thus, reduce the amount of functional β-glucan in the bread.

According to a preferred embodiment of the invention, attempts are made to make the oat bread suitable for the gluten-free diet. In that case, all the raw materials are selected so as not to contain gluten.

An advantage of the present invention over the previously known methods comprises the fact that, by means of the method according to the invention, the baking qualities of oat bread dough are comparable with those of a bread dough containing gluten, such as wheat or rye bread dough. In that case, the oat bread dough can be prepared by industrial processes similar to those used for preparing wheat bread or rye bread.

In the present invention, the texture of the bread can be made as spongy as that of wheat bread. Because of the water retention capacity of β-glucan, the moisture of the bread lasts longer than that of breads made of other grains.

It has been presented that oat flakes and oat bran lower cholesterol, if β-glucan is obtained therefrom in an amount of 3g/day [Salovaara, H. and Sontag-Strohm, T. 2000. Kaura, terveysväittämät ja kauraleipä (Oatmeal, health statements and oat bread). Leipuri 98,5, 12-15] or 0.75g/portion. [Oksman-Caldentey, K.-M. et al. 1999. Kaura elintarvikeraaka-aineena (Oatmeal as raw material for foodstuffs). Espoo: VTT Technical Research Centre of Finland]. It is possible to obtain the recommended amount of β-glucan from a few slices of bread according to the invention. This is of a special importance to those, who follow the gluten-free diet and whose supply of soluble fibre is small. On the market these days, there is a demand for fresh bread that would be suitable for those following the gluten-free diet, in particular.

The method according to the present invention can also be used for preparing rusks. Their advantage is that the amount of β-glucan, as calculated per weight of the product, is double, because the amount of water in the product is half of that in a fresh one.

In the following, the invention is described more closely by means of a detailed specification and examples.

According to a preferred embodiment of the invention, the oat bread dough according to the invention contains oat flour and oat kernels, vegetable-based fibre, a source of additional starch, and liquid. In addition, the composition can contain other ingredients normally used in baking. The composition can contain, for example, spices, such as salt, or other ingredients that add flavour.

Oat *(Avena sativa),* which is suitable to be used in the present invention can be oat that is cultivated, processed and ground by normal methods. Suitable oat varieties include, for example, all oat varieties cultivated in Finland, such as Aarre, Aslak, Belinda, Fiia, Leila, Salo, Suomi, Vaasa, Veli, and Virma. If the purpose is to manufacture bread according to a preferred embodiment of the invention, which is suitable for the gluten-free diet, the oat should be cultivated, harvested and ground so that no essential contamination from other grains is allowed to mix with the oat. Furthermore, the oat kernels should be heat-treated. The purpose of the heat treatment is mainly to destroy the activity of lipase enzyme. The time used for the heat treatment depends on the product and its duration is preferably 1.0 to 1.5 hours and the temperature used preferably 96 to 100°C.

In the present invention can preferably be used oat kernels, rolled oats or flakes, typically oat kernels or rolled oats. The oat flour and rolled oats are typically manufactured by the following method: oat kernels are sorted so that small oat kernels of less than 2mm are removed. The kernels are hulled and heat-treated. After this, the kernels are rolled. Part of the rolled kernels are ground into oat flour, part are screened to obtain flakes, rolled oat, and screened flour, and for the bran production. The oat suitable to be used in the present invention includes, for example, the oat available at Helsinki Mills Ltd, Mylly-Matti Kaurajauho (Oat Flour), Product No. 5520, and Mylly-Matti Kauralitiste (Rolled Oats), Product Mark 5300. 100g of oat flour (Product No. 5200) contains, on an average, 1460kJ of energy, 14g of protein, 56g of carbohydrates, of which 1.3g are sugars, 6.9g of fat, of which 1.2g are saturated fatty acids, 11g of fibre, and 0.002g of sodium. The moisture content of the flour is 12.0% at the maximum. The peroxidase enzyme is inactivated. The screen analysis includes the following fractions: 1 to 5% 1000µm, 2 to 6% 710µm, 20 to 30% 400µm, 10 to 20% 200µm, 10 to 20% 100µm, and 40 to 55% <100µm. 100g of rolled oats (Product No. 5300) contains, on an average, 1430kJ of energy, 12.5g of protein, 57g of carbohydrates, of which 1.3g are sugars, 6.5g of fat, of which 1.9g are saturated fatty acids, 5.7g of dietary fibre, and 0.0016g of sodium. The moisture content of the flour is 11 to 12.5%, on an average, and the specific weight 450 to 470g/l.

The bread dough according to the invention preferably contains at least 50% by weight of oat, more preferably at least 60% by weight, more preferably at least 65% by weight, suitably 68 to 89% by weight from the dry substances that are added to the bread, typically 74 to 83% by weight. In that case, the amount of oat is about 35 to 47% by weight from all the substances that are added to the dough, typically 39 to 44% by weight. The amount of oat flour in the dough is then 38 to 51 % by weight, and that of oat kernels 28 to 40% by weight, as calculated from the dry substances. The amount of oat flour from all the substances is 19 to 27% by weight and that of oat kernels 14 to 21% by weight. The amount of β-glucan in the finished bread can be assessed to be 2.5% by weight. It has been stated that oat lowers the cholesterol, if one gets a daily dose of 3g or 0.75g/portion of β-glucan. This amount of β-glucan is obtained from 4 or 5 slices of bread according to the invention.

Oat kernels and oat flour are preferably added at a ratio of 45:55 - 55:45, more preferably at a ratio of 47:53 - 53:47, most preferably at a ratio of about 50:50. The oat kernels can be added as rolled oats.

Vegetable-based fibre is added to the dough in an amount enough to maintain the texture of the dough until the starch begins to swell, when the bread is baked. Vegetable-based fibre can be added to various breads in amounts of 0.5 to 3.5% by weight, typically 1.1 to 3.1% by weight, suitably 1.3 to 2.6% by weight from the dry substances. Correspondingly, the amount of vegetable fibre, when calculated from all the substances that are added to the dough is 0.3 to 1.9% by weight, typically 0.6 to 1.6% by weight, and suitably 0.7 to 1.4% by weight. Suitable fibres include, for example, the fibre originating in linen or the *Psyllium* plant. When adding the fibre, the effects of the various vegetable fibres on the dough should be taken into account. For example, *Psyllium* fibre should be added in an amount twice the size of that of linen fibres to provide the same effect.

Starch that contains no β-glucan is added to the dough in an amount enough for the starch in the dough to bind the water originating in the oat kernels. If gluten-free bread is to be prepared, the starch should be naturally in a form or treated so as to contain no gluten. The starch can be added to various breads in the form of potato flour, for example. 11 to 23% by weight of starch, typically 14 to 20% by weight, suitably 15 to 18% by weight from the dry substances can be added to the dough. The corresponding amounts, as calculated from all the substances, are 6 to 12% by weight, typically 7 to 11 % by weight, and suitably 8 to 10% by weight.

The amount of dry substances added to the dough can be 500 to 550g, suitably 503 to 536g, typically 508 to 531g per 1kg of dough. The amount of liquid can be 450 to 500g, suitably 464 to 497g, typically 469 to 492g. Any liquid suitable for baking can be used as the liquid. Water is used most commonly. Other liquid substances can be added along with the water fraction.

Spices, such as salt, are added in suitable amounts. Salt can be added in amounts of 0.8 to 2.5% by weight, typically 0.9 to 2.2% by weight, suitably 1 to 1.8% by weight from the dry substances.

Sugar can be added in amounts of 1 to 3% by weight, typically 1.5 to 2.0% by weight, suitably 1.6 to 1.9 from the dry substances. Naturally, the amounts of sugar and salt and the other spices depend on the product.

Yeast can be added as yeast cream by any in bakeries well-known methods.

According to a preferred embodiment of the invention, the oat bread is prepared from dough comprising the following composition (the figures are presented as % by weight from the dry substances):

| | | |
|---|---|---|
| Oat flour | 40 - 51% by weight, preferably | 43 - 48% by weight |
| Oat kernels | 28 - 38% by weight | 31 - 35% by weight |
| Starch | 12 - 23% by weight | 15 - 20% by weight |
| Salt | 0.8 - 1.4% by weight | 0.9 - 1.3% by weight |
| Sugar | 1 - 3% by weight | 1.5 - 1.9% by weight |
| Fibre | 1 - 3% by weight | 1.1 - 1.5% by weight |
| Yeast | | |
| Liquid | | |

According to another preferred embodiment of the invention, the oat bread is prepared from dough comprising the following composition (the figures are presented as % by weight from the dry substances):

| | | |
|---|---|---|
| Oat flour | 38 - 48% by weight, preferably | 41 - 45% by weight |
| Oat kernels | 30 - 40% by weight | 33 - 37% by weight |
| Starch | 11 - 21% by weight | 14 - 18% by weight |
| Salt | 1.5 - 2.5% by weight | 1.8 - 2.2% by weight |
| Sugar | 1.5 - 2.2% by weight | 1.6 - 2% by weight |
| Fibre | 2.1 - 3.1% by weight | 2.4 - 2.8% by weight |
| Yeast | | |
| Liquid | | |

Water is normally used as the liquid in the dough. However, the liquid may fully or partially comprise some other liquid, e.g., milk, or the water can fully or partially be replaced with, for example, an extract, such as oat extract, malt extract or the like. In that case, it should be taken into consideration that, when preparing bread that is suitable to the gluten-free diet, the extracts that are added should also not contain gluten.

The water retention capacity of the oat bread dough according to the invention is high compared to that of wheat bread, for example. The water retention capacity or DR (dough result) is 238 to 248, preferably 241 to 245, most preferably 243.

The oat bread dough according to the description of the invention is treated like wheat or rye bread dough. However, the oat kernels should be soaked in water before adding them to the other raw materials of the dough. The soaking can be carried out so that the vegetable fibres and oat kernels in the form of, e.g., rolled oat, are mixed with water, to which also the sugar may have been added. This mixture is allowed to rest for about half an hour. The temperature at this stage can be kept fairly low, typically, at about +10°C. After this, the dry substances, such as oat flour and the flour that is used as the source of additional starch, such as potato flour, and salt and any possible other spices are blended with the mixture. Then the liquid substances, such as yeast cream and, possibly, various extracts, such as oat extract are added. The dough is mixed by a dough mixer in a usual manner for 3 to 10min, typically, 5min, depending on the type of machine. At this stage, the dough is raised and usually divided into suitable sized pieces. Leavening takes place at a temperature suitable for the functioning of the yeast, typically at about 37°C for 50 to 70min, typically, for an hour with the moisture being about 70 to 80%, most commonly about 75%. Typically, baking takes place at 190 to 200°C, most commonly at 195°C, for 50 to 70min, typically, for about an hour. Finally, the breads are cooled and possibly sliced.

According to an analysis result of the finished bread, the moisture of the bread was preferably 44.1g/100g ±5%, the fat content 3.3g/100g ±9%, ash content 1.6g/100g ±10%, protein content 7.6g/100g ±2%, carbohydrate content 37.3g/100g, energy content 885kJ/100g, saturated fatty acids/fat 19.8% ±10%, monounsaturated fatty acids/fat 37.8% ±10%, polyunsaturated fatty acids/fat 40.7% ±10%, sodium 360mg/100g ±10%, glucose 0.34g/100g ±25%, fructose 0.42g/100g ±15%, saccharose 0.13g/100g ±30%, lactose <0.04g/100g ±25%, total dietary fibre 6.1g/100g ±10%.

The method according to the invention can be used for manufacturing various breads. The breads can be baked free in the oven or in a tin. The method can also be used in manufacturing, for example, torn bread, rolls or rusks. When manufacturing rusks, after baking, the products are dried by a drying process, wherein the products are dried at a lowered temperature (typically less than 150°C) for so long that about half of the water from the fresh bread is removed.

The dough according to the invention can also be used for making fat, thin loafs or pita-type bread. In that case, the dough does not need to be leavened before baking.

### Examples

### Example 1

| | | |
|---|---|---|
| Bread recipe I (bread of 1kg) | | |

| | kg | % by weight (from dry substances) |
|---|---|---|
| Oat flour | 0.24019 | 45.2 |
| Oat kernels | 0.17648 | 33.2 |
| Potato flour | 0.09284 | 17.5 |
| *Psyllium* fibre | 0.00671 | 1.3 |
| Salt | 0.00590 | 1.1 |
| Sugar | 0.00902 | 1.7 |
| Yeast | 0.02800 | |
| Water | 0.45921 | |
| | | |
| Total | 1kg | 100% |

Oat kernels are added in the form of rolled oats (Product No. 5300 of Helsinki Mills Ltd), the vegetable fibre, sugar, and water are added, the mixture is mixed vigorously and soaked for half an hour. The temperature of the soaking water is +10°C. Thereafter, oat flour, potato flour, and salt are added. Then the liquid raw materials, such as yeast cream, are added. The mixture is mixed by a dough mixer for 5 minutes; the dough is raised and divided into pieces of about half a kilo. The breads are leavened at 37°C for 60min, the moisture being 75%.

Baking is carried out at 195°C for 60min.

Finally, the breads are cooled and sliced.

### Example 2

| | | |
|---|---|---|
| Bread recipe II | | |

| | kg | % by weight (from dry substances) |
|---|---|---|
| Oat flour | 0.22000 | 43.2 |
| Oat kernels | 0.17648 | 34.7 |
| Potato flour | 0.08000 | 15.7 |
| *Psyllium* fibre | 0.01340 | 2.6 |
| Salt | 0.01000 | 2.0 |
| Sugar | 0.00900 | 1.8 |
| Yeast | 0.02800 | |
| Oat extract | 0.11500 | |
| Water | 0.50500 | |
| | | |
| Total | 1kg | 100% |

The bread is prepared as in the first example, except that the oat extract is added with the other liquid raw materials, such as yeast cream.
According to an analysis result of the finished bread, the moisture of the bread was 44.1g/100g ±5%, fat content 3.3g/100g ±9%, ash content 1.6g/100g ±10%, protein content 7.6g/100g ±2%, carbohydrate content 37.3g/100g, energy content 885kJ/100g, saturated fatty acids/fat 19.8% ±10%, monounsaturated fatty acids/fat 37.8% ±10%, polyunsaturated fatty acids/fat 40.7% ±10%, sodium 360mg/100g ±10%, glucose 0.34g/100g ±25%, fructose 0.42g/100g ±15%, saccharose 0.13g/100g ±30%, lactose <0.04g/100g ±25%, total dietary fibre 6.1g/100g ±10%.

## Claims

1. A method for preparing dough comprising oat, **characterized in that** the method comprises the following steps:
- adding oat to the dough partially in the form of oat flour and partially in the form of kernels, and adding kernels in such an amount that the kernels are able to bind the liquid in the dough so that the dough is in a solid state;
- adding vegetable-based fibre to the dough in an amount enough to maintain the texture of the dough, when baked; and
- adding starch that contains no β-glucan to the dough in such an amount that there is enough starch in the dough to bind the water that is released from the oat kernels at the baking stage.

2. The method according to Claim 1, **characterized in that** the method is used in an industrial process that corresponds to that used in baking dough containing gluten.

3. The method according to Claim 1 or 2, **characterized in that** oat is added to the dough in an amount of 68 to 89% by weight of the dry substances.

4. The method according to any one of Claims 1 to 3, **characterized in that** the ratio of oat flour to oat kernels is 45:55 - 55:45.

5. The method according to any one of the preceding claims, **characterized in that** the kernels are made swell with water before adding them to the dough.

6. The method according to any one of the preceding claims, **characterized in that** vegetable-based fibre that is able to form a hydrocolloid is added to the dough.

7. The method according to Claim 6, **characterized in that** the vegetable-based fibre is *Psyllium* or linen fibre.

8. The method according to any one of the preceding claims, **characterized in that** flour that contains neither β-glucan nor gluten is added to the dough as a source of additional starch.

9. The method according to any one of the preceding claims, **characterized in that** the source of additional starch comprises potato flour.

10. The method according to any one of the preceding claims, **characterized in that** the water retention capacity DR of the dough is 243 ±5.

11. The method according to any one of the preceding claims, **characterized in that** bread, rolls, flat, thin loafs or pita-type bread are prepared from the dough.

12. A method according to any one of Claims 1 to 10, **characterized in that** rusks are prepared from the dough.

13. Dough, **characterized in that** it is prepared by the method according to one any of Claims 1 to 12.

14. A bakery product, which is prepared from dough according to Claim 13.

15. A bakery product comprising oat, **characterized in that** it is prepared from dough, which comprises oat in an amount of at least 65% by weight from the dry substances that are added to the dough and, in addition, vegetable-based fibre, starch that contains no β-glucan, and that the oat is partially in the form of kernels, partially in the form of flour.

16. The bakery product according to Claim 15, **characterized in that** the dough comprises oat in an amount of 68 to 89% by weight of the dry substances that are added to the dough.

17. The product according to Claim 15 or 16, **characterized in that** the ratio of oat flour to oat kernels is 45:55 - 55:45.

18. The product according to any one of Claims 15 to 17, **characterized in that** the dough contains 0.5 to 3.5% by weight of vegetable-based fibre from the dry substances that are added to the dough.

19. The product according to Claim 18, **characterized in that** the vegetable-based fibre is *Psyllium* or linen fibre.

20. The product according to any one of Claims 15 to 19, **characterized in** the dough comprising starch, which contains no β-glucan, in an amount of 11 to 23% by weight from the dry substances that are added to the dough.

21. The product according to Claim 20, **characterized in that** the source of starch comprises potato flour.
